# EUROPEAN PATENT APPLICATION

(11) **EP 4 303 331 A1**
(43) Date of publication of application: **10.01.2024**
(21) Application number: 22306032.8
(22) Date of filing: 08.07.2022
(51) Int. Cl.: C22B 3/26, C22B 34/24, B01J 38/50, B01J 38/60, C01G 33/00, C01G 35/00

(54) **PROCESS FOR EXTRACTING TANTALUM AND NIOBIUM FROM AN AQUEOUS ACIDIC SOLUTION**

(71) Applicant: Commissariat à l'Energie Atomique et aux Energies Alternatives, 75015 Paris (FR); Centre national de la recherche scientifique, 75016 Paris (FR); UNIVERSITE DE MONTPELLIER, 34090 Montpellier (FR); Ecole Nationale Supérieure de Chimie de Montpellier, 34090 Montpellier (FR)
(72) Inventor: ZEMB, Thomas, 78220 Viroflay (FR); KUNZ, Werner, 93051 Regensburg (DE); PELLET-ROSTAING, Stéphane, 34170 Castelnau Le Leze (FR); PLEINES, Maximilian, 93051 Regensburg (DE); KOCH, Lukas, 70374 Stuttgart (DE)
(74) Representative: IPAZ

(57) **Abstract**

The present invention relates to a process and an installation wherein a ternary system comprising an aqueous acidic solution, an organic solvent not miscible with water and a thermosensitive hydrotropic agent is used to selectively extract tantalum and optionally niobium by cycling extraction between low-temperature single-phase and high temperature two phase regions in the ternary phase prism far from the critical point.

## Description

### FIELD OF THE INVENTION

The present invention relates to the field of extraction and purification of tantalum, and in particular to a process for the extraction and purification of tantalum and optionally niobium from acidic aqueous solutions.

### TECHNICAL BACKGROUND

Strategic metals are present in many everyday products such as hard drives of laptops, mobile phones, cars, batteries and printed circuit boards. Like salt and pepper in food, these high-tech materials are usually used in small quantities but they are nonetheless essential ingredients in these devices. To meet the challenges of dwindling resources and the growth of needs, mining, recycling or substitution appear to be essential levers either to extract metals from low grade ores, to recover material flows from production waste or treatment of more complex objects at the end of their life.

As a consequence of the dramatic grown of numerous innovations in the above mentioned technological sectors, Rare Earth Elements (REEs) demand and prices are increasing, and a shortage in supply lines is observed.

Selective extraction of different metals sharing physical and chemical properties is difficult. Tantalum (Ta) and niobium (Nb) are transition metals important and widely used in different kinds of high-tech industries. In particular, tantalum is an important, chemical inert and high-melting element used in alloys and wires, surgical instruments and electrical components like capacitors, while niobium is used amongst others in steel and superalloys, superconducting magnets medical devices and jewelleries.

The most important sources for Ta and Nb are Tantalite (Fe,Mn)(Ta,Nb)₂O₆, Columbite (Fe,Mn)(Ta,Nb)₂O₆ and Microlite (Ca,Na)₂(Ta,Nb)₂(O,OH,F)₇ Ta and Nb are therefore almost always associated geologically and thus difficult to separate because of their very similar physical and chemical properties.

Liquid-liquid extraction is currently the most effective way of separating tantalum and niobium. The processes known from the art are mainly based on the use of a binary mixture of an aqueous solution and an organic solvent comprising 1-octanol or 2-octanol alone or in admixture with an additional organic compound such as for example octane or methyl isobutyl ketone (MIBK) (Zhourou Lu et al. "Solvent extraction technology for the separation and purification of indium and tantalum: a review", Hydrometallurgy 107, 2011, pp. 1-12).

These processes are however not entirely satisfying because of the strong increase of viscosity observed in the solvent phase for electrolyte amount common in efficient in practice in the "feed", and the low flash-point of most efficient known extractants (MIBK) as well as poor miscibility of solvent such as cyclohexanone with the extractant.

Therefore, there is still a need for a process allowing a selective and efficient extraction tantalum and optionally niobium from aqueous solutions.

The process which is described hereafter and which constitutes the object of the present invention makes it possible to reach this need.

### SUMMARY OF THE INVENTION

The present invention relates to a process wherein a thermosensitive and ternary system is used to selectively extract, from an aqueous acidic solution, at least tantalum, in the form of an anionic salt.

The present invention finds particular application in the treatment of natural and/or industrial waste, either from concentrates of natural minerals rich in tantalum and optionally niobium, such as monazites, bastnaesites, xenotimes, pyrochlores or colombo-tantalites, or concentrates obtained from the treatment of tantalum-rich minerals such as concentrates of "urban mines" consisting of industrial and domestic post-consumer wastes containing tantalum and, in particular, electronic equipment wastes or tantalum products.

The present invention first relates to a process for extracting, from an aqueous acidic solution, tantalum, in the form of a cationic salt, said process comprising at least the steps of:
i) providing, at a first temperature T1, a ternary mixture comprising: a) an aqueous acidic solution containing a mixture of metallic elements including at least tantalum to be extracted, b) an organic solvent not miscible with water, c) a quantity Q1 of a thermosensitive hydrotropic agent comprising a hydrophilic part and a hydrophobic part, and T1 is comprised between 15°C and 35°C and is inferior to the critical temperature of said ternary mixture,
ii) heating said ternary mixture at a second temperature T2 at which said mixture presents a biphasic structure consisting of an aqueous phase and an organic phase enriched in at least tantalum, wherein T2 is comprised between 40 and 75°C, is superior to the critical temperature of said ternary mixture and is distinct by 15°C to 50°C from T1,
iii) separating, from the biphasic structure obtained in step ii), said organic phase from said aqueous phase,
iv) extracting tantalum from said organic phase,
wherein:
- said ternary mixture of step i) is in a phase boundary pre-Ouzo zone, said pre-Ouzo zone being characterized as an ultra-flexible surfactant-free microemulsion comprising aggregates of about 20 to 300 molecules linked together in dynamic aggregates,
- said hydrophilic part of said hydrotropic agent comprises at least one ethoxy group,
- the molarity of said aqueous acidic solution is at least 2M.

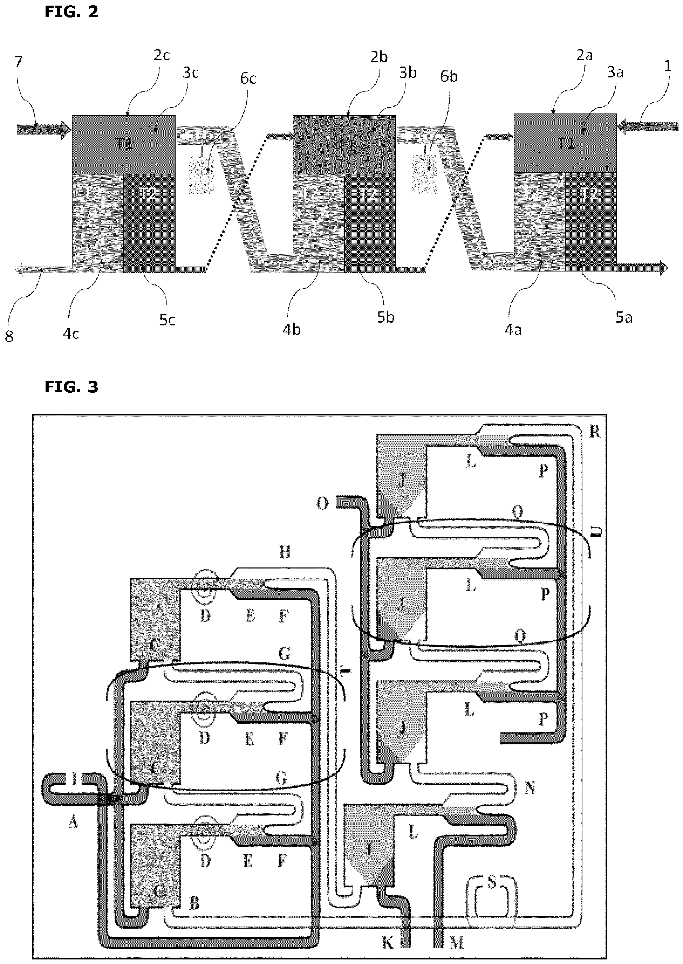

The present invention further relates to an installation for carrying out the process according to the invention to extract at least tantalum in the form of an anionic salt, from an aqueous acidic solution. More particularly, said installation comprising at least a mixing chamber and appropriate cooling and heating means for said extraction. Said installation also comprises required means to ensure recirculation and separation means, such as represented on figure 2.

### DETAILED DESCRIPTION

In a first aspect, the invention relates to a process for extracting, from an aqueous acidic solution, tantalum, in the form of a cationic salt, said process comprising at least the steps of:
(i) providing, at a first temperature T1, a ternary mixture comprising: a) an aqueous acidic solution containing a mixture of metallic elements including at least tantalum to be extracted, b) an organic solvent not miscible with water, c) a quantity Q1 of a thermosensitive hydrotropic agent comprising a hydrophilic part and a hydrophobic part, T1 being comprised between 15°C and 35°C and being inferior to the critical temperature of said ternary mixture,
(ii) heating said ternary mixture at a second temperature T2 at which said mixture presents a biphasic structure consisting of an aqueous phase and an organic phase at least partially loaded in at least tantalum, wherein T2 is comprised between 40 and 75°C, is superior to the critical temperature of said ternary mixture and is distinct by 15°C to 50°C from T1,
(iii) separating, from the biphasic structure obtained in step ii), said organic phase and said aqueous phase,
(iv) extracting at least tantalum from said organic phase,
wherein:
- said ternary mixture of step i) is in a phase boundary pre-Ouzo zone, said pre-Ouzo zone being characterized as an ultra-flexible surfactant-free microemulsion comprising dynamic aggregates of about 20 to 300 molecules bound together,
- said hydrophilic part of said hydrotropic agent comprises at least one ethoxy group,
- the molarity of said aqueous acidic solution is at least 2M.

A ternary mixture in a "pre-Ouzo" zone, which is also designated as "surfactant-free micro emulsion" or "ultra-flexible micro emulsion", is characterized by the combination of the following properties:
- comprises aggregates of more than 30 molecules locally covered by a partial monolayer of hydrotropic agent, such as defined in Th. Zemb et al., Proceedings of the National academy of science of the USA, 2016, 113(16), 4260-4262.
- the static light scattering gives an apparent average aggregate mass of more than 30 times of the molecular mass of the solvent used,
- the ternary mixture is far from its critical point, wherein for each component, the difference between said critical point and its mass percentage is of at least 3 %, preferably of at least 5 % and more preferably of at least 8 % in the case of tantalum and niobium.

According to the invention, the terms "thermosensitive hydrotropic agent", refers to a hydrotropic agent able to introduce thermosensitivity to the demixing compositions of the ternary mixture of said hydrotropic agent, the organic solvent and the hydrophobic agent.

According to the invention, the terms "dynamic aggregates" refers to aggregates in aqueous solutions that show a critical aggregate concentration (determined by any standard technique such as surface tension) equal or more than 0.1M at room temperature (S. Schöttl and D. Horinek, Current opinion in Colloid & Interface Science, vol. 22 (2016) pp. 8-13).

The process according to the invention presents the advantage of using a simple ternary system wherein the properties of the organic solvent and of the hydrotropic agent are combined in a single, monophasic, ternary mixture. In the process according to the invention, steps (i) to (iii) may be repeated in a cyclic process comprising n reaction cycles, by combining the flux of aqueous and organic phases in a counter-current arrangement.

In a process according to the invention, the diameter of aggregates in said ternary mixture at step (i) is determined by any appropriate method known by a person skilled in the art, preferably by X-ray light scattering with a correlation length above 2 nm.

According to the present invention, by "surfactant-free monophasic microemulsion structure" it is intended a monophasic ternary mixture having a microemulsion-like structure in the absence of any surfactant within said mixture. The absence of surfactant or detergent provides to a process according to the invention the advantage of being easier to implement and to avoid the necessity of eliminating said detergent.

The aqueous acidic solution containing a mixture of metallic elements including at least tantalum to be extracted according to the process of the invention is for example an acid concentration of ores or waste. The concentration of said tantalum in said aqueous acidic solution is preferably comprised between 0.1 to 10 g/L.

According to the invention, said acidic solution may be any solution comprising a strong acid and having a molarity ranging from 2 M to about 12 M. According to a preferred embodiment, the strong acid is sulphuric acid or nitric acid, sulphuric acid being particularly preferred.

According to a particular embodiment of the present invention, the molarity of said aqueous acid solution is at least 5 M. In that case, the process according the invention allows not only extraction of tantalum but also the extraction of niobium. Therefore, according to this particular embodiment, the molarity of said aqueous acidic solution is at least 5M and the process according to the present invention is for selectively extracting tantalum and niobium from said aqueous acidic solution.

The amount of said aqueous solution in the ternary mixture of step (i) may range from about 10 to 90 weight % (wt. %) and preferably from about 15 to 80 wt. % relative to the total weight of the ternary mixture.

According to the present invention, "not miscible with water" regarding the organic solvent refers to an organic solvent that cannot mix with water and forms a heterogeneous mixture. More precisely, said definition encompasses solvents which miscibility in water is less than 0.001 mole fraction and wherein the miscibility of water in said solvents is more than 0.1 mole fraction.

According to a particular embodiment of the present invention, said organic solvent is chosen among fatty alcohols having a carbon chain comprising at least 8 carbon atoms, Guerbet alcohols, ethyl acetates, aldehydes, ketones, phosphorus-based non-ionic liquids, amides, carbollides, carboranes, and phosphonates.

In a particular and preferred embodiment of the invention, said organic solvent is chosen among: 1-octanol, 2-octanol, methyl isobutyl ketone (MIBK,) cyclohexanone, and tributylphosphate (TBP). Among these organic solvents, 1-octanol and 2-octanol are particularly preferred.

The amount of said organic solvent in the ternary mixture of step (i) may range from about 5 to 70 weight % (wt. %) and preferably from about 5 to 50 wt. % relative to the total weight of the ternary mixture.

According to the present invention, "hydrotropic agent" refers to a cosolvent comprising a hydrophilic part and a hydrophobic part, i.e. which is miscible in water as well as in the organic solvent not miscible with water, and which, when present at the quantity Q1 (also denoted "minimum hydrotrope concentration" (MHC)), allows a significant solubilisation of at least tantalum in the form of an anionic salt. A hydrotropic agent reduces the surface tension of water without forming micelles by itself. This micellisation is evidenced by the existence of a plateau of surface pressure versus hydrotrope concentration.

According to the invention, said quantity Q1 of the hydrotropic agent is typically above 10 weight % of said ternary mixture weight, preferably from 10 weight % to 55 weight % of said ternary mixture total weight, more preferably from 20 weight % to 50 weight % of said ternary mixture weight.

Examples of said hydrotropic agents are: propylene glycol alkyl ethers, with alkyl being chosen among: methyl, ethyl, propyl, isopropyl, butyl, isobutyl and pentyl, such as 1-propoxy-2-propanol (PnP), and dipropylene glycol n-propyl ether (dPnP).

Among these hydrotropic agents, 1-propoxy-2-propanol is particularly preferred.

In a particular embodiment of the process according to the invention, step (i) first comprises the mixing of said organic solvent and said hydrotropic agent, then it comprises the addition of said aqueous acidic solution, so as to prepare the ternary mixture of step (i).

According to the invention, both T1 and T2 differ from the critical temperature of said ternary mixture, wherein the respective difference between T1 or T2 and the critical temperature of said ternary mixture is of at least 3°C, preferably of at least 5°C, more preferably of at least 10°C.

The critical temperature of a given ternary mixture is easily determined by established methods such as the one described in: Alberto Arce, Alberto Arce, Jr., and Oscar Rodriguez, J. Chem. Eng. Data 2022, 67, 286-296.

According to a preferred embodiment of the present invention, T1 ranges from about 15 to 35°C and more preferably from about 20 to 30°C.

According to a preferred embodiment of the present invention, T2 ranges from about 45 to 70°C and more preferably from about 50 to 65°C.

Heating of the ternary mixture provided in step (i) from temperature T1 to temperature T2 at step (ii) can be carried out by any means or devices known by a person skilled in the art to appropriately heat said mixtures. As an example, one can mention microwave or Bain Marie.

At step (iii), said organic phase can be separated from said aqueous phase by any appropriate means such as for example by draining, pipetting, centrifugation, etc....

In step (ii), temperature T2 is maintained for a duration sufficient for phase separation to occur and solvent extraction of at least tantalum from the ternary mixture to the organic phase, typically for 1 to 20 minutes. If necessary for intensification, the process can be accelerated by a factor of hundred using centrifugal extractor of low acceleration (<3000g)

According to the invention, both T1 and T2 differ from the critical temperature of said ternary mixture, wherein the respective difference between T1 or T2 and the critical temperature of said ternary mixture is of at least 3°C, preferably of at least 5°C, more preferably of at least 10°C. In a particular embodiment of the invention, during step ii) the ternary mixture may be centrifuged. This centrifugation carried out during said step ii) is intended to facilitate and/or to accelerate the extraction of at least tantalum according to the process of the invention.

According to a particular and preferred embodiment of the present invention, steps (i) to (iii) are reiterated at least once, more preferably from 2 to 20 times and even more preferably from 3 to 6 times, before step (iv) is carried out and after bringing said ternary mixture back to temperature T1.

In that case, and according to a first mode of realisation of this particular embodiment, the process comprises, after step (iii) and before each reiteration of steps (i) to (iii), at least the following sub-steps:
(1a) cooling the aqueous phase recovered at step (iii) to temperature T1,
(2a) mixing said aqueous phase with said organic solvent and said hydrotropic agent to obtain said ternary mixture, and
(3a) adjusting the amount of said hydrotropic agent in said ternary mixture to said quantity Q1.

This first mode of realisation is preferably carried out when a single iteration of steps (i) to (iii) is not sufficient to extract all tantalum initially present in the initial aqueous acidic solution or to further extract niobium from said initial aqueous acidic solution. In this later case the molarity of the aqueous acid solution is then adjusted to at least 5 M to extract niobium.

According to a second mode of realisation of this particular embodiment, the process comprises, after step (iii) and before each reiteration of steps (i) to (iii), at least the following sub-steps:
(1b) cooling the organic phase recovered at step (iii) to temperature T1,
(2b) mixing said organic phase with a new aqueous acidic solution containing a mixture of metallic elements including at least tantalum to be extracted and said hydrotropic agent to obtain said ternary mixture, and
(3b) adjusting the amount of said hydrotropic agent in said ternary mixture to said quantity Q1.

This second mode of realisation is preferably carried out to obtain an organic phase highly concentrated in at least tantalum.

In both the first and second modes of realisation of this particular embodiment, adjusting the amount of said hydrotropic agent in said ternary mixture to said quantity Q1 at step (3a) or (3b) is needed in order to keep the efficient performance in distribution coefficient during step (ii).

In both the first and second modes of realisation of this particular embodiment, the cooling steps (1a) and (1b) from temperature T2 to temperature T1 can be carried out thanks to any cooling devices such as for example an ice bath or refrigerated devices.

At step (iv), extracting tantalum from said organic phase may be carried by washing said organic phase with aqueous acidic solution. As an example, when the organic solvent of the organic phase is octanol, said organic phase can be washed out with a 0.1 to 0.2 M aqueous sulfuric acid solution to transfer tantalum from the organic phase to the aqueous sulfuric acid solution. As another example and when the organic phase comprises both tantalum and niobium, said organic phase is firstly washed out with a 3.5 to 4.0 M first aqueous sulfuric acid solution to transfer niobium from the organic phase to said first aqueous sulfuric acid solution, and then said organic phase is secondly washed out with a 0.1 to 0.2 M second aqueous sulfuric acid solution to transfer tantalum from the organic phase to said second aqueous sulfuric acid solution.

In a second aspect, the present invention relates to an installation for extracting of at least tantalum in the form of an anionic salt, according to the process defined according to the first aspect of the present invention.

More particularly, the present invention relates to an installation for carrying out the process according to the invention, wherein said installation comprises at least:
- a mixing chamber for preparing a ternary mixture comprising a) an aqueous acidic solution containing a mixture of metallic elements including at least tantalum to be extracted, b) an organic solvent not miscible with water, c) a quantity Q1 of hydrotropic agent comprising a hydrophilic part and a hydrophobic part, said hydrophilic part comprising at least one ethoxy group,
- a heating device for heating said ternary mixture,
- a cooling device,
- means for conveying said aqueous acidic solution, said organic solvent, said thermosensitive hydrotropic agent and said mixture, and
- means for controlling at least the flow and the temperature of said solutions and mixture.

Further features and advantages of the invention will be apparent from the detailed description of the following examples, as well as from the attached figures in which:

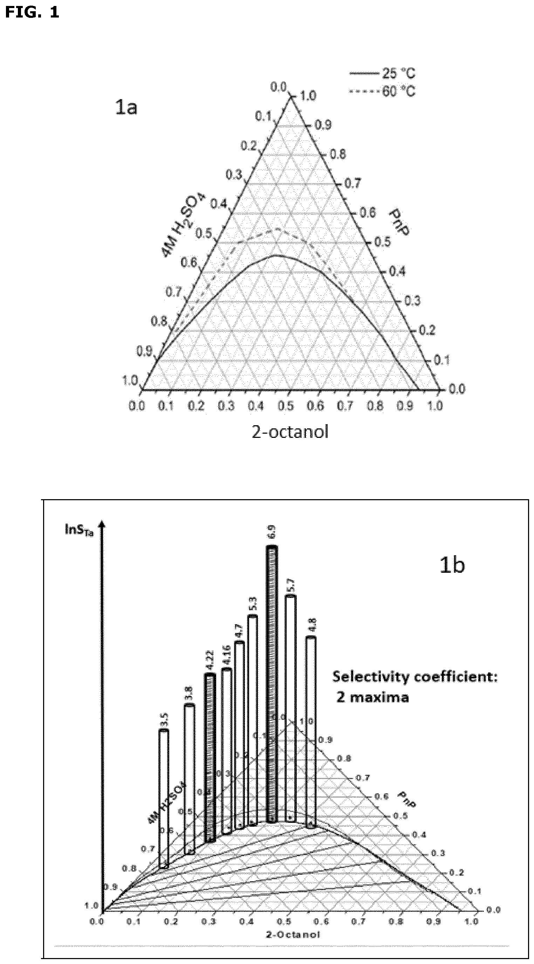

Figure 1A represents the phase diagram at 25°C and 60°C of a ternary mixture of an aqueous phase, PnP and 2-octanol according to example 1. Figure 1B represents the Ta/Nb separation coefficient depending on the monophasic starting composition.
Figure 2 represents an example of a flow diagram of several reaction cycles combining the flux of aqueous and organic phases in a counter-current arrangement. In a first stage, an initial aqueous acidic solution **1** containing a mixture of metallic elements including at least tantalum to be extracted and a thermosensitive hydrotropic agent, is combined, in a first mixing chamber **2a,** with an organic phase **5b** coming from a second mixing chamber **2b** and a thermosensitive hydrotropic agent at a temperature T1 to form a homogeneous, nanostructured ternary mixture **3a** in which the amount of said hydrotropic agent is equal to Q1. Next, the ternary mixture **3a** is separated into two phases with the help of a heating device (not represented) reaching temperature from T1 to T2 and their density differences. This creates an aqueous raffinate **4a** mainly containing the undesired metal(s) and an organic phase **5a** at least partially loaded in at least tantalum. In a second stage, the aqueous raffinate **4a** is sent towards the second mixing chamber **2b** and mixed with an organic phase **5c** coming from a third mixing chamber **2c** and with a sufficient amount of a thermosensitive hydrotropic agent coming from a container **6b,** to form a homogeneous, nanostructured ternary mixture **3b** in which the amount of said hydrotropic agent is readjusted to said quantity Q1, said hydrotropic agent being identical to the hydrotropic agent used in the first step of the process. Next, the ternary mixture **3b** is separated into two phases with the help of a heating device (not represented) reaching temperature from T1 to T2 and their density differences. This step creates an aqueous raffinate **4b** mainly containing the undesired metal(s) and an organic phase **5b** at least partially loaded in at least tantalum. In a third stage, the aqueous raffinate **4b** is sent towards a third mixing chamber **2c** and mixed with a fresh organic solvent **7** and with a sufficient amount of a thermosensitive hydrotropic agent coming from a container **6c,** to form a homogeneous, nanostructured ternary mixture **3c** in which the amount of said hydrotropic agent is readjusted to said quantity Q1, said hydrotropic agent being identical to the hydrotropic agent used in the first and second steps of the process. When the process is ended, each of the tantalum-loaded organic phases **5a, 5b** and **5c** can be recovered. The aqueous phase **8** coming from the third mixing chamber **2c** and containing unwanted metallic elements can be removed.
Figure 3 represents a scheme of performing the extraction according to the invention in the form of a cascade which allows to recycle the hydrotropic agent. In the first step, an [A] initial aqueous acidic phase containing water, sulphuric acid, PnP (1-propoxy-2-propanol), and the metal salts is combined with a [B] initial organic phase containing PnP and 2-octanol at a temperature T1 to form a [C] homogeneous, nanostructured ternary mixture in a mixing chamber. Next, the mixture is separated into two phases with the help of a [D] heating device (spiral) reaching temperature from T1 to T2 and [E] their density differences. This step creates an [F] aqueous raffinate mainly containing the undesired metal(s) and a [G] tantalum partially-loaded organic phase. By adding [A] fresh aqueous phase, this step can be [T] repeated until a [H] tantalum fully-loaded organic phase is achieved. The [F] aqueous raffinate can be recycled by loading it with desired metals again.

### EXAMPLE: Separation of tantalum and niobium

The present example describes selective extraction of tantalum and niobium by a process of the invention.

A ternary mixture is prepared, comprising:
- an acidic aqueous phase of 4 M sulphuric acid, comprising niobium and tantalum
- 1-Propoxy-2-propanol (PnP) as temperature-sensitive hydrotropic agent, to ensure the miscibility of aqueous phase and the organic solvent,
- 2-octanol as organic solvent not miscible with water.

The phase diagram for this system at 25 and 60 °C and the separation coefficient are respectively indicated in Figures 1A and 1B.

As it can be seen on this figure, the distribution coefficient (kD) as well as the Ta/Nb separation coefficient (InS) show two maxima around the compositions reported in Table 1 below:

**TABLE 1**

| | | | | |
|---|---|---|---|---|
| Maxima 1 | kD = 3.2 | 9.3 wt% 2-Octanol | 38.2 wt% PnP | 52.5 wt% aq. phase |
| | InS = 4.2 | | | |
| Maxima 2 | kD = 5.3 | 20.6 wt% 2-Octanol | 48.7 wt% PnP | 30.8 wt% aq. phase |
| | InS = 6.9 | | | |

In a first step, aqueous phase, PnP and 2-octanol were mixed as follows: PnP and 2-octanol were mixed in a proportion of 0.82 and 0.18 with a tolerance +/- 0.02, then the aqueous solution was added to obtain a mass fraction 0.4 / 0.1 / 0.5 for PnP / 2-octanol / aqueous solution, with a possible variation of 0.03 for each component (the points being in between the two lines drawn for 25C and 60C).

Mixing the three components at low temperature T1 at 25°C, of this composition resulted in the formation of a homogeneous, nanostructured microemulsions exhibiting certain advantages such as high contact surface between aqueous and organic phase, low viscosity and fast achievement of thermodynamic equilibrium. At this temperature, the ions distributed between the existing aqueous and organic pseudo phases according to the distribution coefficient.

In a second step, the temperature was increased to 60°C (T2). Due to the temperature-sensitivity of the hydrotropic agent, the phase borders of the ternary system changed as indicated in Figure 1A. The result was a phase separation into an aqueous-rich and an organic-rich phase. The distribution coefficient was above 50 in favour of the solvent phase as shown in figure 1, allowing separation from iron and purification by associating elements in cascade This step can be accelerated by the use of a centrifuge. The volume ratio between these two phases is depending on the tie-line of the phase diagram at 60°C. Tantalum was mainly transferred into the organic-rich phase while niobium mainly stays in the aqueous phase. The separation coefficient is high and depends on the initial composition of the phase diagram (*cf.* Figure 1B).

The number of cycling steps and consequently the separation between the two metals can be increased by combining the flux of aqueous and organic phase in a counter-current arrangement, as shown in Figure 2. In each step, an aqueous phase and an organic phase are mixed at room temperature in an appropriate volume ratio to achieve a homogeneous phase. After that, the temperature is increased again to separate the two resulting phases that are transferred to the next cycling chambers. From 3 to 20 cycles comprising steps ii) and iii) can be performed, preferably from 6 to 10 cycles.

## Claims

1. Process for extracting, from an aqueous acidic solution, tantalum, in the form of a cationic salt, said process comprising at least the steps of:
(i) providing, at a first temperature T1, a ternary mixture comprising: a) an aqueous acidic solution containing a mixture of metallic elements including at least tantalum to be extracted, b) an organic solvent not miscible with water, c) a quantity Q1 of a thermosensitive hydrotropic agent comprising a hydrophilic part and a hydrophobic part, T1 being comprised between 15°C and 35°C and being inferior to the critical temperature of said ternary mixture,
(ii) heating said ternary mixture at a second temperature T2 at which said mixture presents a biphasic structure consisting of an aqueous phase and an organic phase at least partially loaded in at least tantalum, wherein T2 is comprised between 40 and 75°C, is superior to the critical temperature of said ternary mixture and is distinct by 15°C to 50°C from T1,
(iii) separating, from the biphasic structure obtained in step ii), said organic phase and said aqueous phase,
(iv) extracting at least tantalum from said organic phase,
wherein:
- said ternary mixture of step i) is in a phase boundary pre-Ouzo zone, said pre-Ouzo zone being characterized as an ultra-flexible surfactant-free microemulsion comprising dynamic aggregates of about 20 to 300 molecules bound together,
- said hydrophilic part of said hydrotropic agent comprises at least one ethoxy group,
- the molarity of said aqueous acidic solution is at least 2M.

2. The process according to claim 1, wherein the concentration of said tantalum in said aqueous acidic solution is comprised between 0.1 g/l and 10 g/L.

3. The process according to claim 1 or 2, wherein the molarity of the aqueous acidic solution ranges from 2 M to 12 M.

4. The process according to any one of claims 1 to 3, wherein said acidic aqueous solution comprises a strong acid chosen among sulphuric acid and nitric acid.

5. The process according to any one of claims 1 to 4, wherein the molarity of said aqueous acidic solution is at least 5M and the process is for selectively extracting tantalum and niobium from said aqueous acidic solution.

6. The process according to any one of claims 1 to 5, wherein the amount of said acidic aqueous solution in the ternary mixture of step (i) ranges from 10 to 90 weight % relative to the total weight of the ternary mixture.

7. The process according to any one of claims 1 to 6, wherein said organic solvent is chosen among 1-octanol, 2-octanol, methyl isobutyl ketone, cyclohexanone, and tributylphosphate.

8. The process according to any one of claims 1 to 7, wherein the amount of said organic solvent in the ternary mixture of step (i) ranges from 5 to 70 weight % relative to the total weight of the ternary mixture.

9. The process according to any one of claims 1 to 8, wherein said hydrotropic agent is 1-propoxy-2-propanol or dipropylene glycol n-propyl ether.

10. The process according to any one of claims 1 to 9, wherein the amount of said quantity Q1 of the hydrotropic agent in the ternary mixture of step (i) ranges from 10 to 55 weight % relative to the total weight of the ternary mixture.

11. The process according to any one of claims 1 to 10, wherein T1 ranges from 20 to 30°C.

12. The process according to any one of claims 1 to 11, wherein T2 ranges from about 45 to 70°C.

13. The process according to any one of claims 1 to 12, wherein steps (i) to (iii) are reiterated at least once before step (iv) is carried out and after bringing said ternary mixture back to temperature T1.

14. The process according to claim 13, wherein said process comprises, after step (iii) and before each reiteration of steps (i) to (iii), at least the following sub-steps:
(1a) cooling the aqueous phase recovered at step (iii) to temperature T1,
(2a) mixing said aqueous phase with said organic solvent and said hydrotropic agent to obtain said ternary mixture, and
(3a) adjusting the amount of said hydrotropic agent in said ternary mixture to said quantity Q1.

15. The process according to claim 13, wherein said process comprises, after step (iii) and before each reiteration of steps (i) to (iii), at least the following sub-steps:
(1b) cooling the organic phase recovered at step (iii) to temperature T1,
(2b) mixing said organic phase with a new aqueous acidic solution containing a mixture of metallic elements including at least tantalum to be extracted and said hydrotropic agent to obtain said ternary mixture, and
(3b) adjusting the amount of said hydrotropic agent in said ternary mixture to said quantity Q1.

16. An installation for carrying out the process as defined in any one of claims 1 to 15 wherein said installation comprises at least:
- a mixing chamber for preparing a ternary mixture comprising a) an aqueous acidic solution containing a mixture of metallic elements including at least tantalum to be extracted, b) an organic solvent not miscible with water, c) a quantity Q1 of a hydrotropic agent comprising a hydrophilic part and a hydrophobic part, said hydrophilic part comprising at least one ethoxy group,
- a heating device for heating said ternary mixture,
- a cooling device,
- means for conveying said aqueous acidic solution, said organic solvent, said thermosensitive hydrotropic agent and said mixture, and
- means for controlling at least the flow and the temperature of said solutions and mixture.
